# EUROPÄISCHE PATENTANMELDUNG

(11) **EP 4 431 347 A1**
(43) Veröffentlichungstag der Anmeldung: **18.09.2024**
(21) Anmeldenummer: 24157029.0
(22) Anmeldetag: 12.02.2024
(51) Int. Cl.: B60R 25/24, G07C 9/00, H04B 1/034, H04W 4/80

(54) **ID-GEBER ZUR AUTHENTIFIZIERUNG, SET ZUM ZUSAMMENBAU EINES ID-GEBERS SOWIE SYSTEM**

(30) Priorität: 17.03.2023 DE 102023106810
(71) Anmelder: Huf Hülsbeck & Fürst GmbH & Co. KG, 42551 Velbert (DE)
(72) Erfinder: Ziller, Boris, 40885 Ratingen (DE); Diekers, Marco, 41466 Neuss (DE); Ette, Bernd, 38442 Wolfsburg (DE)
(74) Vertreter: Zenz Patentanwälte Partnerschaft mbB

(57) **Zusammenfassung**

Es wird ein ID-Geber (1) zur Authentifizierung an einer Zugriffs-Steuereinheit einer physischen Einheit beschrieben. Der ID-Geber (1) weist unter anderem auf:
- eine ID-Geber-BLE-Schnittstelle (2) mit einer Antenne (21),
- einen Mikrocontroller (3),
- ein Schaltmittel (4) und
- einen Batterieaufnahmeraum (6) zur Aufnahme einer Batterie (5).

Der Mikrocontroller (3) ist eingerichtet, in Reaktion auf den Erhalt des Schaltsignals das Senden eines Authentifizierungssignals (7) auszulösen, das eine Authentifizierungsinformation (8) enthält, und das als BLE-Beacon-Datenpaket ausgebildet ist.

Es werden außerdem ein Set zum Zusammenbau eines ID-Gebers (1) und ein System aus ID-Geber (1) und physischer Einheit beschrieben.

## Beschreibung

Die Erfindung betrifft einen ID-Geber zur Authentifizierung an einer Zugriffs-Steuereinheit einer physischen Einheit, wobei zur Authentifizierung von dem ID-Geber eine Authentifizierungsinformation ausgesandt wird. Die Erfindung betrifft ferner ein Set zum Zusammenbau eines entsprechenden ID-Gebers. Schließlich betrifft die Erfindung ein System.

Es ist aus der Praxis bekannt, eine Authentifizierung mit einem portablen ID-Geber an einer Zugriffs-Steuereinheit der physischen Einheit vorzunehmen. Nach erfolgreicher Authentifizierung gewährt die Zugriffs-Steuereinheit Zugriff auf die physische Einheit beziehungsweise auf eine oder mehrere Funktionen der physischen Einheit. Die physische Einheit kann beispielsweise als Fahrzeug ausgebildet sein. Bei als Fahrzeug ausgebildeten physischen Einheiten ist bereits seit einiger Zeit aus der Praxis bekannt, dass diese eine als elektronisches Schließsystem ausgebildete Zugriffs-Steuereinheit aufweisen. Aus der Praxis bekannte elektronische Schließsysteme basieren beispielsweise auf einer Verwendung von ID-Gebern, die als portable Funkschlüssel ausgebildet sind, und die mittels Funks mit dem Fahrzeug kommunizieren.

Schließsysteme von Fahrzeugen, die mit als Funkschlüssel ausgebildeten ID-Gebern kommunizieren, sind in der Praxis beispielsweise unter den Bezeichnungen *Passiv-Entry*/*Passiv-Start* (PEPS) bekannt. Solche Systeme basieren beispielsweise auf einer Kombination von niederfrequenter und hochfrequenter Funkkommunikation, die bidirektional zwischen dem ID-Geber und einer zentralen Steuereinheit des Fahrzeugs durchgeführt wird.

In Kombination mit weiteren Einrichtungen am Fahrzeug, beispielsweise Annäherungssensoren, stellen derartige Systeme eine Kombination aus hohem Bedienkomfort einerseits und guter Sicherheit andererseits bereit.

Entsprechend der beschriebenen Vorgehensweise sind Systeme der erwähnten Art vergleichsweise aufwendig, was unter anderem mit einem entsprechenden Kostenaufwand einhergeht. Derartige Systeme sind daher besonders gut für die Verwendung an beziehungsweise in Premiumprodukten geeignet. Zur Ergänzung der Produktpalette besteht daneben der Wunsch, auch weniger kostenintensive Systeme für eine Authentifizierung eines ID-Gebers an einer Zugriffs-Steuereinheit einer physischen Einheit bereitzustellen. Die angestrebte Kosteneffizienz soll dabei gleichwohl einem angemessenen Sicherheitsstandard sowie einem zeitgemäßen Komfort-Niveau des Systems nicht im Wege stehen.

Vor dem Hintergrund der obigen Darlegungen liegt der hier vorgestellten Erfindung die Aufgabe zugrunde, eine Lösung bereitzustellen, welche diese beschriebenen Anforderungen erfüllt.

Die Aufgabe wird mit einem ID-Geber zur Authentifizierung an einer Zugriffs-Steuereinheit einer physischen Einheit mit den Merkmalen des Anspruchs 1 gelöst. Die Aufgabe wird ferner mit einem Set zum Zusammenbau eines ID-Gebers mit den Merkmalen des Anspruchs 16 gelöst. Schließlich wird die Aufgabe mit einem System aus ID-Geber und physischer Einheit mit den Merkmalen des Anspruchs 18 gelöst.

Es ist ein ID-Geber zur Authentifizierung an einer Zugriffs-Steuereinheit einer physischen Einheit vorgesehen.

Die Authentifizierung erfolgt mittels einer Authentifizierungsinformation, welche der ID-Geber aussendet. Die Zugriffs-Steuereinheit dient dazu, einen Zugriff auf die physische Einheit zu sperren und/oder freizugeben, wobei die Freigabe nach einem erfolgreichen Authentifizieren erfolgt und nicht Bestandteil des beschriebenen ID-Gebers ist. Ein Beispiel für die physische Einheit kann ein Fahrzeug sein. Die Zugriffs-Steuereinheit des Fahrzeugs kann beispielsweise als elektronisches Schließsystem des Fahrzeugs ausgebildet sein.

Der ID-Geber ist portabel und er weist wenigstens eine ID-Geber-BLE-Schnittstelle auf. Der Begriff der BLE-Schnittstelle bezieht sich auf eine Gesamtheit von Komponenten, welche für eine BLE-Kommunikation gemäß Bluetooth-Spezifikation geeignet ist. Es sind also sämtliche hardware- und softwaremäßigen Voraussetzungen erfüllt, die für einen spezifikationsgemäßen Betrieb einer BLE-Kommunikation erforderlich sind. Insbesondere weist die BLE-Schnittstelle, wie erwähnt, eine Antenne auf. Bei einer BLE-Schnittstelle kann es sich beispielsweise um ein Modul handeln, welches sämtliche zur BLE-Kommunikation erforderlichen Voraussetzungen erfüllt; aber auch eine Gesamtheit von miteinander gekoppelten Einzelkomponenten kann vorgesehen sein. Die ID-Geber-BLE-Schnittstelle kann beispielsweise als kommerziell verfügbares Bluetooth-Modul ausgebildet sein.

Das Akronym BLE steht für Bluetooth-Low-Energy. Bei Bluetooth-Low-Energy handelt es sich um ein Kommunikationsprotokoll, welches in den neueren Bluetooth-Spezifikationen mit der Version 4.0 oder jünger spezifiziert ist, beispielsweise am Prioritätstag dieser Anmeldung als Bluetooth Core Specification 5.0, zu welcher nähere Informationen unter https://www.bluetooth.com/specifications/specs/core-specification-5-0/ abrufbar sind.

Mit der ID-Geber-BLE-Schnittstelle ist ein Mikrocontroller gekoppelt. Ebenfalls mit dem Mikrocontroller gekoppelt ist ein Schaltmittel zur Ausgabe eines Schaltsignals an den Mikrocontroller in Reaktion darauf, dass das Schaltmittel ausgelöst wird. Der ID-Geber enthält also ein Mittel beziehungsweise Element, welches, wenn es ausgelöst wird, ein entsprechendes Schaltsignal an den Mikrocontroller ausgibt, welches dem Mikrocontroller die Informationen übermittelt, dass eine Betätigung des Schaltmittels erfolgt ist.

Weiterhin enthält der ID-Geber einen Batterieaufnahmeraum, um eine Batterie zur Stromversorgung aufnehmen zu können. In einer Weiterbildung kann zudem vorgesehen sein, dass in dem Batterieaufnahmeraum bereits eine Batterie enthalten ist.

Der Mikrocontroller ist eingerichtet, in Reaktion auf den Erhalt des Schaltsignals am Mikrocontroller, also nach dem Auslösen des Schaltmittels, das Senden eines Authentifizierungssignals mittels der ID-Geber-BLE-Schnittstelle auszulösen. Der Mikrocontroller veranlasst also in Reaktion auf ein erhaltenes Schaltsignal, dass ein Authentifizierungssignal mittels der ID-Geber-BLE-Schnittstelle versandt wird. Der ID-Geber ist also mit Komponenten versehen, die miteinander gekoppelt und eingerichtet sind, mit dem Auslösen des Schaltmittels das Versenden eines Authentifizierungssignals herbeizuführen.

Ein zentraler Gedanke der vorliegenden Entwicklung betrifft die Ausgestaltung des Authentifizierungssignals. Zum einen ist festgelegt, dass das Authentifizierungssignal die Authentifizierungsinformation enthält. Das bedeutet, dass das Authentifizierungssignal, das mit der ID-Geber-BLE-Schnittstelle versendet wird, die Zugriffs-Steuereinheit einer physischen Einheit mit der Authentifizierungsinformation versorgt, sodass die Zugriffs-Steuereinheit bei geeigneter und zueinander angepasster Bildung von Authentifizierungsinformation und Zugriffs-Steuereinheit die Authentifizierung des ID-Gebers vornehmen kann.

Ein weiterer zentraler Aspekt betreffend das Authentifizierungssignal besteht darin, dass das Authentifizierungssignal als BLE-Beacon-Datenpaket ausgebildet ist.

Der Begriff des BLE-Beacon-Datenpakets und synonym damit des Beacon-Datenpakets in der hier eingeführten Weise ist als Kurzbezeichnung eines Bluetooth-Low-Energy-Beacon-Datenpaket zu verstehen. Innerhalb des Nutzens von Bluetooth-Low-Energy im Rahmen der Bluetooth-Spezifikationen mit der Version 4.0 oder neuer hat sich der Begriff des Beacons etabliert. In Anwendungsfeldern, in denen Hardwaretransmitter einen Identifikator für den Empfang von umliegenden Empfangsgeräten aussenden, ist ein Beacon als Bezeichnung für den Hardwaretransmitter, welcher Beacon-Datenpakete aussendet, ein dem Fachmann bekannter feststehender Begriff.

Bei dem Beacon-Datenpaket handelt es sich um ein Datenpaket kleiner Größe, typischerweise mehrerer 10 bis mehrerer 100 Byte. Die Nutzung von Beacons basiert in der Regel auf vorgegebenen Protokollen, in denen die mögliche Zusammensetzung des jeweiligen Beacon-Datenpakets definiert ist, beispielsweise auf dem proprietären iBeacon^{®}-Protokoll der Firma Apple oder auf dem frei implementierbaren Eddystone^{®}-Protokoll der Firma Google oder auf der offenen und frei verfügbaren AltBeacon Spezifikation. Zur Umsetzung der vorliegenden Entwicklung kann eines dieser beiden oder jedes andere verfügbare Beacon-Protokoll genutzt werden.

Anwendungsfelder, in denen Beacons genutzt werden, stehen häufig in Zusammenhang mit Lokalisation.

Der erfindungsgemäße ID-Geber ist also insbesondere durch die Zusammenwirkung von Mikrocontroller und mit ihm gekoppelter ID-Geber-BLE-Schnittstelle in die Lage versetzt, BLE-Beacon-Datenpakete auszusenden, das heißt also: Datenpakete, die in ihrer Struktur denjenigen Datenpaketen gleichen oder ähnlich sind, welche typischerweise von Beacons ausgesendet werden. In einem Moment, in welchem das Schaltmittel des ID-Gebers betätigt wird, sendet also der ID-Geber ein Beacon-Datenpaket aus, welches bevorzugt gemäß einem verfügbaren Beacon-Protokoll ausgestaltet ist.

Die BLE-Beacon-Datenpakete weisen in den verfügbaren Beacon-Protokollen insbesondere die beiden Merkmale auf, dass sie zum einen vergleichsweise klein sind (beispielsweise im Fall eines iBeacon^{®}-Datafields 31 Bytes und im Fall eines Eddystone^{®}-Beacons 256 Bytes) und sie zum anderen derart konfiguriert werden können, dass sie im Rahmen der begrenzten Datenmenge vergleichsweise frei konfigurierbar sind. Dadurch kann erreicht werden, dass ein Authentifizierungssignal als BLE-Beacon-Datenpaket gebildet und gesendet wird, welches eine Authentifizierungsinformation enthält, die ausreichend komplex ist, um in vielen Anwendungsszenarien ausreichende Sicherheitsanforderungen zu erfüllen. Beispielsweise kann das BLE-Beacon-Datenpaket als Eddystone-Beacon ausgebildet sein, welches innerhalb eines bis zu 256 Bytes großen Eddystone-Frames 128 Bytes für eine, beispielsweise verschlüsselt abgelegte, Authentifizierungsinformation aufwendet. Das BLE-Datenpaket kann auch beispielsweise als AltBeacon-Datenpaket ausgebildet sein.

Ein Unterschied zu den zunehmen verwendeten Beacon-Transmittern besteht darin, dass Anwendungen der Beacon-Transmitter typischerweise in Intervallen im Millisekunden-Abstand Beacon-Datenpakete wiederkehrend gesendet werden, wohingehend bei dem erfindungsgemäßen ID-Geber das als BLE-Beacon-Datenpaket ausgebildete Authentifizierungssignal in Reaktion auf die Auslösung des Schaltmittels versendet wird.

Der erfindungsgemäße ID-Geber stellt aufgrund der oben beschriebenen Ausführung eine in mehrerlei Hinsicht vorteilhafte Eigenschaftskombinationen zur Verfügung.

Ein Vorteil der Nutzung von Beacon-Kommunikation, das heißt: einer Nutzung insbesondere von Protokollen, die auf dem Versenden von BLE-Beacon-Datenpaketen beruhen, besteht darin, dass sie - nicht zuletzt aufgrund der vorgegebenen vergleichsweise geringen Größe (damit ist gemeint: Datenmenge) der einzelnen Beacon-Datenpakete - mit einem vergleichsweise geringen Energieumsatz beziehungsweise Strombedarf einhergeht. Daraus resultiert wiederum eine vergleichsweise hohe Langlebigkeit des ID-Gebers, bevor beispielsweise ein Batteriewechsel oder alternativ ein Austausch des ID-Gebers erforderlich wird.

Ein weiterer Vorteil eines erfindungsgemäßen ID-Gebers ergibt sich aus den Eigenschaften der BLE-Kommunikation, auf welcher der Versand von BLE-Beacon-Datenpaketen basiert. Die BLE-Funkkommunikation weist inhärent eine stark begrenzte Reichweite der Funkkommunikation aud: mit dem Empfang des Authentifizierungssignals wird der Zugriffs-Steuereinheit der physischen Einheit somit implizit die Information an die Hand gegeben, dass der ID-Geber sich innerhalb eines Abstands um die Zugriffs-Steuereinheit-BLE-Schnittstelle befindet, welcher der typischen Reichweite einer Beacon-Kommunikation entspricht, welche wiederum in der Größenordnung von einigen zehn Metern liegt, und die - sofern gewünscht - gegebenenfalls noch je nach gewünschten Anforderungsszenarien von den mit der Umsetzung der Entwicklung betrauten Entwicklern noch zu geringeren Werten hin verändert werden kann. Die Bereitstellung eines erfindungsgemäßen ID-Gebers befähigt somit eine empfangende physische Einheit zu einer ersten Grobabschätzung einer Lokalisierung des Bedieners. Ein weiterer mit der begrenzten Reichweite der Beacon-Kommunikation einhergehende Vorteil besteht darin, dass die Wahrscheinlichkeit eines Empfangs der mit der ID-Geber-BLE-Schnittstelle ausgesandten Authentifizierungssignale durch einen unerwünschten Empfänger, etwa eines böswilligen Datennutzers, beispielsweise im Ziel einer Durchführung einer sogenannten Relay-Station-Attacke, reduziert wird. Beide der oben genannten Effekte führen zu einer Erhöhung der Betriebssicherheit der physischen Einheit.

Gemäß einer vorteilhaften Weiterbildung ist das Schaltmittel als ein manuell bedienbarer Druckknopf ausgebildet, der mittels Drückens betätigt werden kann, so dass das als Druckknopf ausgebildete Schaltmittel ausgelöst wird. Der Druckknopf kann beispielsweise mittels einer Feder rückgestellt sein und beim Drücken einen elektrischen Kontakt schließen, wodurch die Ausgabe des Schaltsignals an den Mikrocontroller bewirkt wird.

In einer vorteilhaften Weiterbildung kann vorgesehen sein, dass der Mikrocontroller eingerichtet ist, das Authentifizierungssignal nach Auslösen des Schaltmittels auszugeben, wenn eine Dauer des Drückens, also der Zeitraum vom Beginn des Drückens bis zum Ende des Drückens, einen ersten Zeitdauerschwellwert nicht überschritten hat. Beispielsweise kann der Mikrocontroller eingerichtet sein, den Zeitraum zu erfassen, während welchem der Druckknopf gedrückt ist; dies kann beispielsweise genutzt werden um dann, wenn die Zeitdauer des Drückens nicht zu groß ist, also einen ersten Zeitdauerschwellwert, der beispielsweise zwischen einer halben Sekunde und fünf Sekunden festgelegt sein kann, das Authentifizierungssignal auszugeben. Zusätzlich kann optional vorgesehen sein, dass in einem Fall, dass der Zeitdauerschwellwert überschritten wird, anstelle des Authentifizierungssignals ein Alternativsignal ausgegeben wird, wenn die Dauer des Drückens den ersten Zeitdauerschwellwert überschritten hat. Das Alternativsignal kann beispielsweise ebenfalls als BLE-Beacon-Datenpakt ausgebildet sein. Eine derartige Ausführungsform ermöglicht, trotz des Vorhandenseins nur eines Druckknopfes zwei unterschiedliche Signale ausgeben zu können, wobei in Abhängigkeit von der Zeitdauer des Drückens entweder mit dem Authentifizierungssignal eine Authentifizierung ermöglicht wird, beispielsweise die Authentifizierung am Fahrzeug, oder bei längerem Drücken eine andere Funktionalität angesprochen werden kann. Eine solche andere Funktionalität kann von Herstellern physischer Einheiten beispielsweise genutzt werden, um weitere Komfortfunktionen anzusprechen. Beispielsweise kann bei einer als Fahrzeug ausgebildeten physischen Einheit als eine mittels Alternativsignal auszulösender Komfortfunktion das Öffnen und/oder das Schließen eines Fensters vorgesehen sein.

Eine andere Variante dieser vorteilhaften Ausführungsform sieht vor, dass nach Auslösen des Schaltmittels das Authentifizierungssignal ausgegeben wird, und zwar bevorzugt, bevor eine Dauer des Drückens einen ersten Zeitdauerschwellwert nicht überschritten hat, so wie zusätzlich nach dem Senden des Authentifizierungssignal ein, bevorzugt als BLE-Beacon-Datenpaket ausgebildetes, Alternativsignal ausgegeben wird, wenn die Dauer des Drückens den ersten Zeitdauerschwellwert überschritten hat. In diesem Fall ist es möglich, der physischen Einheit sowohl zunächst das Authentifizierungssignal bereitzustellen als auch sodann eine Anforderung einer weiteren Funktion mittels des Alternativsignals zu ermöglichen.

In einer vorteilhaften Weiterbildung der obigen Überlegung ist der Mikrocontroller eingerichtet, nach Auslösen des Schaltmittels das Alternativsignal nur unter der zusätzlichen Bedingung auszugeben, dass die Dauer des Drückens einen zweiten Zeitdauerschwellwert, der größer ist als der erste Zeitdauerschwellwert, nicht überschritten hat, bevorzugt ansonsten das Auslösen als nicht erfolgtes Auslösen zu verwerfen. Mit dieser Ausführung ist es dem Bediener ermöglicht, im Zuge des Herbeiführens des Alternativsignals das Senden des Alternativsignals noch abzubrechen. Beispielsweise kann vorgesehen sein, dass der zweite Zeitdauerschwellwert einen Wert zwischen drei und zehn Sekunden aufweist. Alternativ oder zusätzlich ist besonders bevorzugt ist vorgesehen, dass der erste Zeitdauerschwellwert eine halbe Sekunde bis 5 Sekunden beträgt und der zweite Zeitdauerschwellwert eine halbe bis 5 Sekunden größer ist als der erste Zeitdauerschwellwert.

Alternativ oder zusätzlich kann vorgesehen sein, dass ein zweites Schaltmittel in oder an dem ID-Geber angeordnet ist, wobei das zweite Schaltmittel bevorzugt als Sensor ausgebildet ist, insbesondere als Bewegungssensor, oder als Beschleunigungssensor, oder als Gyro-Sensor. Der zweite Sensor soll dazu dienen, die Ausgabe des Schaltsignals an den Mikrocontroller in Reaktion auf ein Bewegen des ID-Gebers vorzunehmen. So kann es dem Bediener ermöglicht werden, auch ohne ein Betätigen des Druckknopfs ein Aussenden des Authentifizierungssignals zu ermöglichen. Der Mikrocontroller kann dabei eingerichtet sein, bestimmte vom Beschleunigungssensor oder Gyro-Sensor oder Bewegungssensor ausgegebene Signale als Voraussetzung für das Aussenden des Authentifizierungssignals vorauszusetzen; die Abfrage des Mikrocontrollers kann beispielsweise dahingehend eingerichtet sein, dass das Authentifizierungssignal von dem Mikrocontroller nur dann ausgegeben wird, wenn ein von dem Sensor ausgegebenes Signal erhalten wird, welches mit einem zuvor einprogrammierten Bewegungsmuster des Bedieners übereinstimmt. Beispielsweise kann in einem Fall, in welchem der Sensor als Beschleunigungssensor ausgebildet ist, vorgesehen sein, dass der Beschleunigungssensor dem Mikrocontroller einen Beschleunigungswert ausgibt, der oberhalb eines Beschleunigungsschwellwerts liegt. Dadurch wird in vorteilhafter Weise erreicht, dass auch bei häufiger oder wiederkehrender Bewegung des Bedieners eine Ausgabe des Authentifizierungssignals außer in den beabsichtigten Situationen nicht oder lediglich selten vorkommt mit der vorteilhaften Folge, dass ein Anteil des Stromverbrauchs vermieden wird.

Eine alternative Weiterbildung des ID-Gebers sieht vor, dass das Schaltmittel als Bewegungssensor oder als Beschleunigungssensor oder als Gyro-Sensor ausgebildet ist zur Ausgabe des Schaltsignals an den Mikrocontroller in Reaktion auf ein Bewegen des ID-Gebers. In diesem Fall funktioniert die Ausgabe des Authentifizierungssignals in Abhängigkeit von der Sensorausgabe beispielsweise analog zu der zuvor beschriebenen Weise, im Unterschied dazu ist in dieser Ausführungsvariante allerdings vorgesehen, dass der Sensor das Einzige am ID-Geber angeordnete Schaltmittel ist.

Bevorzugt ist das Authentifizierungssignal derart ausgebildet, dass es die Authentifizierungsinformation in verschlüsselter Weise enthält. Beispielsweise kann die Authentifizierungsinformation mit einem der Zugriffs-Steuereinheit zugeordneten öffentlichen Schlüssel eines asymmetrischen kryptographischen Verschlüsselungsverfahren verschlüsselt sein. Alternativ ist es möglich, dass die Authentifizierungsinformation mit einem der Zugriffs-Steuereinheit zugeordneten geheimen Schlüssel eines symmetrischen kryptographischen Verschlüsselungsverfahren verschlüsselt ist. Die Verschlüsselung der Authentifizierungsinformation führt zu dem Vorteil, dass auch ein Abfangen des Authentifizierungssignals nicht unmittelbar die Kompromittierung der Authentifizierungsinformation zur Folge hat. Vorteil dieser Vorgehensweise ist, dass nach einem Abgreifen des Authentifizierungssignals eine Authentifizierung mit der ursprünglichen Authentifizierungsinformation immer noch zugelassen werden kann, so dass eine softwaremäßige Anpassung der kryptographischen Methode ausreichend ist, um die ursprüngliche Sicherheit wiederherzustellen.

Gemäß einer Weiterbildung weist der ID-Geber ein Ausgabemittel auf, das beispielsweise als LED ausgebildet ist, und das eingerichtet ist, nach Erhalt einer BLE-Nachricht, die bevorzugt als *Scan request* oder als *Send request* ausgebildet ist, ein Signal auszugeben. Ein derart ausgebildeter ID-Geber kann beispielsweise genutzt werden, um mittels der von der Zugriffs-Steuereinheit zugesandten BLE-Nachricht eine Information an den Bediener auszugeben, beispielsweise über den ordnungsgemäßen Erhalt des Authentifizierungssignals oder alternativ des ordnungsgemäßen Erhalts der Authentifizierungsinformation, gegebenenfalls zusätzlich zur Signalisierung der erfolgreichen Authentifizierung.

Besonders bevorzugt ist gemäß einer Weiterbildung, dass die ID-Geber-BLE-Schnittstelle und der Mikrocontroller als System-on-a-Chip ausgebildet sind oder Teil eines System-on-a-Chip sind. Dies hat den Vorteil, dass nach Bereitstellung der entsprechenden System-on-a-Chip-Bauteile das Zusammenfügen des ID-Gebers, beispielsweise an einer externen Fertigungsstätte, mit geringem Zeitaufwand möglich ist.

Eine vorteilhafte Weiterbildung sieht vor, dass im ID-Geber ein separates Speicherelement angeordnet ist, auf dem die Authentifizierungsinformation hinterlegt ist. Das Speicherelement kann beispielsweise mit dem Mikrocontroller drahtgebunden gekoppelt sein, alternativ oder zusätzlich kann vorgesehen sein, dass das Speicherelement als RFID-Transponder, bevorzugt als passiver RFID-Transponder oder als NFC-Tag, ausgebildet ist.

Die Ausbildung des Speicherelements, welches die Authentifizierungsinformation enthält, als RFID-Transponder oder als NFC-Tag hat den Vorteil, dass der ID-Geber selbst genutzt werden kann, um die Authentifizierungsinformation durch Heranhalten an eine entsprechend mit einem RFID-Leser oder NFC-Leser ausgestattete Zugriff-Steuereinheit einer physischen Einheit unmittelbar zur Kenntnis zu geben; ein gewisses Sicherheitsniveau wird dabei durch die begrenzte Sendereichweite des RFID-Transponders oder des NFC-Tags gewährleistet. Ein entsprechend ausgebildeter ID-Geber besitzt somit zwei Fähigkeiten, nämlich zum einen die Fähigkeit, mittels Auslösen des Schaltmittels die Ausgabe des Authentifizierungssignals herbeizuführen, welches bevorzugt die Authentifizierungsinformation in verschlüsselter Weise enthält, und zum anderen die Fähigkeit, in alternativer Anwendung die Authentifizierungsinformation durch unmittelbares Heranhalten des ID-Gebers an einen entsprechend ausgebildeten RFID-Leser oder einen zum Lesen einer NFC-Information ausgebildeten NFC-Chip zu übermitteln. Für letzteren Fall ist zudem nicht zwingend erforderlich, dass die Authentifizierungsinformation verschlüsselt ist, da durch die begrenzte Sendereichweite ein Abhören der übertragenen Informationen als ausreichend unwahrscheinlich bewertet werden kann. Diese beschriebene Ausführungsform des ID-Gebers hat den Vorteil, dass beispielsweise in einer Situation, in welcher keine Stromversorgung mehr gewährleistet ist, beispielsweise nach Entleeren der Batterie, trotzdem noch ein Zugang zu der physischen Einheit gewährleistet bleibt, wodurch eine Notzugangsfunktionalität vorhanden ist.

In einer bevorzugten Weiterbildung des ID-Gebers ist der Mikrocontroller eingerichtet, die Authentifizierungsinformation, welche auf dem Speicherelement vorhanden ist, entweder durch drahtgebundene Übermittlung oder aufgrund eines mit dem Mikrocontroller verbundenen und zum Auslesen des NFC-Tags ausgebildeten NFC-Chips, zu empfangen, sie sodann zu verschlüsseln, und sie anschließend, gegebenenfalls mit weiteren erforderlichen oder gewünschten Informationen, wie beispielsweise einer UUID, mit ihr ein BLE-Beacon-Pakets zu bilden und dieses als Authentifizierungssignal auszusenden. Diese Vorgehensweise kann in besonders eleganter Weise umgesetzt werden aufgrund der Nutzung der BLE-Beacon-Datenpakete, da beispielsweise das bekannte AES-Verschlüsselungsverfahren von einigen Beacon-Protokollen vorgesehen ist.

Besonders bevorzugt ist eine Weiterbildung, gemäß welcher der ID-Geber mehrteilig ausgebildet ist. In dieser Variante weist der ID-Geber zumindest ein erstes ID-Geber-Teil und ein zweites ID-Geber-Teil auf, wobei das erste ID-Geber-Teil und das zweite ID-Geber-Teil lösbar oder unlösbar miteinander verbunden sind. Das erste ID-Geber-Teil weist zumindest die ID-Geber-BLE-Schnittstelle mit der Antenne und dem Mikrocontroller auf. Bevorzugt weist das erste ID-Geber-Teil zusätzlich das Schaltmittel und den Batterieaufnahmeraum auf. Das zweite ID-Geber-Teil weist zumindest das separate Speicherelement auf. Für den Fall, dass das erste ID-Geber-Teil nicht das Schaltmittel und den Batterieaufnahmeraum enthält, kann dies auch Bestandteil des zweiten ID-Geber-Teils sein.

Ein weiterer Gedanke der Erfindung betrifft ein Set zum Zusammenbau eines ID-Gebers in der zuvor beschriebenen mehrteilig ausgebildeten Variante. Das Set umfasst das erste ID-Geber-Teil und das zweite ID-Geber-Teil in separater Weise, wobei das erste ID-Geber-Teil und das zweite ID-Geber-Teil separat voneinander vorliegen, und wobei der erfindungsgemäße ID-Geber oder eine seiner Weiterbildungen mittels Verbindens des ersten ID-Geber-Teils mit dem zweiten ID-Geber-Teil herstellbar ist. Das Vorsehen eines solchen Sets hat den Vorteil, dass auch in nicht zusammengefügtem Zustand ein zweites ID-Geber-Teil vorliegt, welches das separate Speicherelement enthält, so dass - insbesondere dann, wenn das separate Speicherelement in Form eines RFID-Transponders oder eines NFC-Tags vorliegt, bereits ohne Vorhandensein eines ersten ID-Geber-Teils eine Möglichkeit zur Zugänglichmachung der physischen Einheit besteht. Die erweiterte Funktion der Bereitstellung des Authentifizierungssignals als BLE-Beacon-Datenpaket infolge einer Auslösung eines Schaltmittels kann somit zum einen als optional vorgesehene Möglichkeit angeboten werden. Dazu erlaubt die separate Bereitstellung der zwei Teile die Möglichkeit, das erste ID-Geber-Teil, beispielsweise im Fall eines Defekts in diesem vorhandener elektronischer Bauteile, mit einem Ersatzbauteil zu ersetzen und damit eine kosteneffiziente und resourcenschonende Bereitstellung des ID-Gebers zu ermöglichen.

Besonders bevorzugt weisen das erste ID-Geber-Teil und das zweite ID-Geber-Teil zueinander komplementäre Verbindungsmittel auf. Ein Beispiel für ein geeignetes komplementäres Verbindungsmittel ist ein Bajonettverschluss. Der Vorteil eines komplementären Verbindungsmittels, wie beispielsweise eines Bajonettverschlusses, besteht darin, dass das Zusammenfügen des ersten ID-Geber-Teils und des zweiten ID-Geber-Teils ohne Kleben der Teile möglich ist, wodurch insbesondere eine leichtere Austauschbarkeit des ersten ID-Geber-Teils beispielsweise im Falle eines Defekts, ermöglicht wird.

Ein weiterer Gedanke der Erfindung ist ein System aus ID-Geber der eingangs beschriebenen erfindungsgemäßen Weise oder seiner Weiterbildungen und aus physischer Einheit, aufweisend eine Zugriffs-Steuereinheit. Die Zugriffs-Steuereinheit umfasst dabei:
- eine Zugriffs-Steuereinheit-BLE-Schnittstelle mit einer Antenne,
- mit der Zugriffs-Steuereinheit-BLE-Schnittstelle gekoppelte Steuer- und Speichermittel, wobei die Steuer- und Speichermittel ausgebildet sind, ein von der Zugriffs-Steuereinheit-BLE-Schnittstelle empfangenes Authentifizierungssignal auf seine Authentizität hin zu prüfen.

Das bedeutet beispielsweise, dass die Steuer- und Speichermittel mit den rechnerischen Fähigkeiten und den entsprechenden Informationen, beispielsweise bei Verwendung eines asymmetrischen Verschlüsselungsverfahrens mit dem privaten Schlüssel der Zugriffs-Steuereinheit, ausgestattet sind, um ausgehend von dem empfangenen als BLE-Beacon-Datenpaket ausgebildeten Authentifizierungssignal die Authentifizierungsinformation zu extrahieren, und sodann die Authentifizierungsinformation mit einem entsprechenden Vergleichswert abzugleichen, um eine Authentizität der Authentifizierungsinformation zu prüfen sowie anhand der Prüfung festzustellen, ob der ID-Geber ein zum Zugang zu einer Funktion der physischen Einheit authentifizierter ID-Geber ist.

Die auf dem ID-Geber vorhandene Authentifizierungsinformation und auf den Steuer- und Speichermitteln vorhandene Authentizitätsprüfungsinformation sind dabei zueinander zugeordnete, bevorzugt komplementäre, kryptographische Schlüssel oder umfassen solche, wobei der Begriff er komplementären kryptographischen Schlüssel dahingehend zu verstehen ist, dass die kryptographischen Schlüssel zueinander gehörig sind; ein Beispiel für zueinander komplementäre kryptographische Schlüssel sind ein privater und ein öffentlicher Schlüssel eines asymmetrischen Verschlüsselungsverfahrens, ein anderes Beispiel sind zwei identische kryptographische Schlüssel eines symmetrischen Verschlüsselungsverfahrens.

Gemäß einer Ausführungsform weist die physische Einheit eine Anzahl von n, aber wenigstens zwei, Zugriffs-Steuereinheit-BLE-Schnittstellen auf, die voneinander beabstandet an der physischen Einheit angeordnet sind. Die Steuer- und Speichermittel sind dabei dahingehend ausgebildet, dass RSSI-Werte, die an den Zugriffs-Steuereinheit-BLE-Schnittstellen beim Empfangen des Authentifizierungssignals erfasst werden, genutzt werden, um eine n-Lateration und/oder eine n-Angulation zur Positionsermittlung des ID-Gebers auszuwerten; das heißt beispielsweise, dass in einem Fall, in welchem drei Zugriffs-Steuereinheit-BLE-Schnittstellen vorhanden sind, die Steuer- und Speichermittel ausgebildet sind, eine Trilateration und/oder eine Triangulation durchzuführen, um eine Positionsermittlung des ID-Gebers mittels Auswertens der erfassten RSSI-Werte zu gewinnen.

Eine vorteilhafte Weiterbildung des Systems sieht vor, dass an der physischen Einheit ein mit Steuer- und Speichermittel gekoppelter NFC-Leser angeordnet ist, wobei die Steuer- und Speichermittel ausgebildet sind, eine mit dem NFC-Leser erfasste Authentifizierungsinformation auf ihre Authentizität hin zu prüfen. In einem solchen System ist die physische Einheit somit entsprechend ausgebildet, mit einer oben beschriebenen Weiterbildung eines ID-Gebers, aufweisend einen NFC-Tag, eine Datenübermittlung durchzuführen, und eine vom ID-Geber empfangene Authentifizierungsinformation zur Prüfung der Authentizität zu nutzen.

Besonders bevorzugt weist das System außerdem ein Smartphone auf, welches zum Aussenden des Authentifizierungssignals als BLE-Beacon-Datenpaket eingerichtet ist. Gegenwärtig kommerziell verfügbare Smartphones sind üblicherweise von Hause aus zum Versenden von BLE-Nachrichten vorbereitet. Gemäß dieser Weiterbildung ist das Smartphone zudem vorbereitet, beispielsweise mittels bereitgestellter App, das Authentifizierungssignal zu versenden, um den Zutritt zur physischen Einheit oder zu einer Funktion der physischen Einheit freizuschalten. Es kann also vorgesehen sein, dass Smartphone und ID-Geber redundant als wahlweise auswählbare Authentifikationsmittel zur Zugänglichmachung der Funktion der physischen Einheit vorliegen und je nach Nutzungsvorlieben eines Bedieners zur Nutzung ausgewählt werden können.

Besonders bevorzugt ist die physische Einheit ein Fahrzeug, beispielsweise ein Landfahrzeug, besonders bevorzugt ein Personenkraftwagen.

Weitere Einzelheiten, Merkmale und Vorteile der erfindungsgemäßen Entwicklungen ergeben sich aus der nachfolgenden Beschreibung im Zusammenhang mit den Figuren, in welchen beispielhaft Ausführungsbeispiele der beschriebenen Entwicklungen dargestellt sind.

Es versteht sich, dass die vorstehend erläuterten wie auch nachfolgend genannten Merkmale nicht nur in der jeweils angegebenen Kombination, sondern auch in anderen Kombinationen oder in Alleinstellung verwendbar sind.

Es zeigen:
Fig. 1a: ein erstes Ausführungsbeispiel eines erfindungsgemäßen ID-Gebers;
Fig. 1b: ein zweites Ausführungsbeispiel eines erfindungsgemäßen ID-Gebers;
Fig. 2: ein drittes Ausführungsbeispiel eines erfindungsgemäßen ID-Gebers;
Fig. 3: ein Ausführungsbeispiel eines erfindungsgemäßen Sets zum Zusammenbau eines ID-Gebers;
Fig. 4: ein Ausführungsbeispiel eines erfindungsgemäßen Systems aus ID-Geber und physischer Einheit.

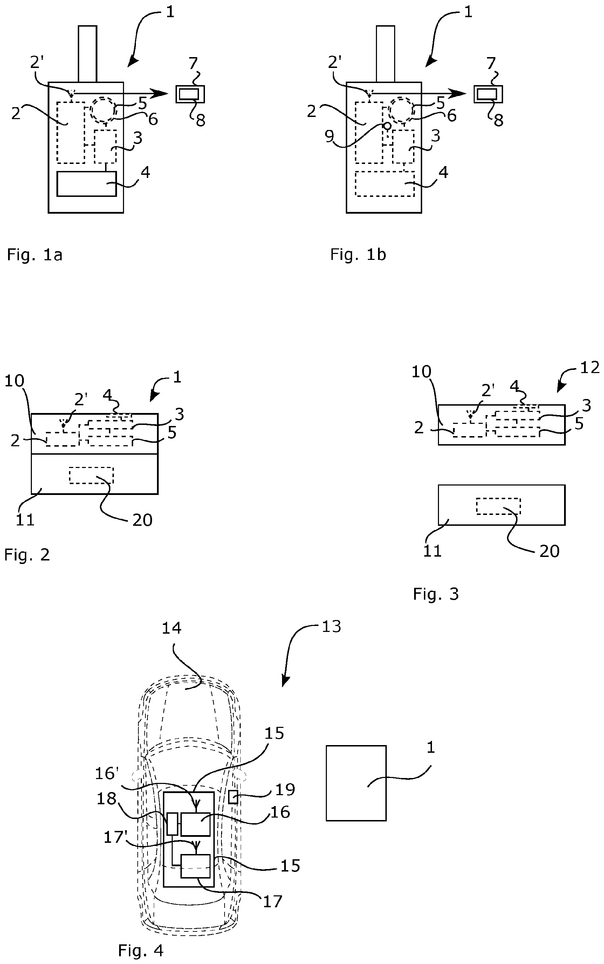

In Fig. 1a ist ein erstes Ausführungsbeispiel eines ID-Gebers 1 zur Authentifizierung an einer Zugriffs-Steuereinheit einer physischen Einheit gezeigt. Um die gewünschte Funktionalität zu erreichen, weist der ID-Geber 1 zum einen eine ID-Geber-BLE-Schnittstelle 2 mit einer Antenne 2` auf, wobei die Antenne 2`Bestandteil der ID-Geber-BLE-Schnittstelle 2 ist. Weiterhin ist in dem ID-Geber 1 ein Mikrocontroller 3 angeordnet, der mit der ID-Geber-BLE-Schnittstelle 2 gekoppelt ist. Die ID-Geber-BLE-Schnittstelle 2 und der Mikrocontroller 3 sind als System-on-a-Chip ausgebildet. Der ID-Geber 1 verfügt darüber hinaus über ein Schaltmittel 4, das als ein manuell bedienbarer Druckknopf 4 ausgebildet ist. In dem ID-Geber 1 ist zudem eine Batterie 5 in einem Batterieaufnahmeraum 6 aufgenommen, die als Stromversorgungsquelle die Funktionalität des ID-Gebers 1 sicherstellt. Bei Drücken des Druckknopfes 4 wird ein elektrischer Kontakt geschlossen und hieraufhin ein Schaltsignal an den Mikrocontroller 3 ausgegeben. Der Mikrocontroller 3 ist, insbesondere durch geeignete Programmierung, eingerichtet, den Erhalt des Schaltsignals zu erkennen und auf dieses Schaltsignal in vorgegebener Weise zu reagieren. Der Mikrocontroller 3 veranlasst in Reaktion auf den Erhalt des Schaltsignals das Senden eines Authentifizierungssignals 7 mittels der ID-Geber-BLE-Schnittstelle 2. Das Authentifizierungssignal 7 ist als BLE-Beacon-Datenpaket ausgebildet und ist aus diesem Grund nur wenige 10 bis wenige 100 Byte groß, zumeist weniger als 1000 Byte groß, und es kann beispielsweise als Eddystone^{®}-Beacon-Datenpaket oder als AltBeacon ausgebildet sein. Das als BLE-Beacon-Datenpaket ausgebildete Authentifizierungssignal umfasst zumindest eine Authentifizierungsinformation 8, mit der die Authentifizierung an einer entsprechend hierfür vorbereiteten Zugriffs-Streuereinheit einer physischen Einheit erfolgen kann.

In Fig. 1b ist eine andere Ausführungsform eines ID-Gebers 1 dargestellt. Die in Fig. 1b dargestellte Ausführungsform unterscheidet sich von der in Fig. 1a dargestellten Ausführungsform dahingehend, dass das Schaltmittel 4 als Gyro-Sensor ausgebildet ist, welches in Reaktion auf ein Bewegen des ID-Gebers 1 ein Schaltsignal an den Mikrocontroller 3 ausgibt.

Zudem weist der ID-Geber 1 ein als LED ausgebildetes Ausgabemittel 9 auf, das mit dem Mikrocontroller 3 gekoppelt ist. Nach Erhalt einer, bevorzugt als *Scan request* oder als *Send request* ausgebildeten, vorgegebenen BLE-Nachricht an der ID-Geber-BLE-Schnittstelle 2 wird die LED 9 von dem Mikrocontroller 3 zur Ausgabe eines Lichtsignals angesteuert. Damit kann bei entsprechender Programmierung der Quelle der vorgegebenen BLE-Nachricht der Bediener mit einer Rückmeldung informiert werden, beispielsweise über den ordnungsgemäßen Erhalt des Authentifizierungssignals 7 oder über das erfolgreiche Authentifizieren anhand der Authentifizierungsinformation.

Fig. 2 ist ein drittes Ausführungsbeispiel eines erfindungsgemäßen ID-Gebers 1 zu entnehmen, und zwar in einer Seitenansicht. Der ID-Geber 1 in der gezeigten Ausführungsform weist alle selben Elemente auf wie der ID-Geber 1 in der in Fig. 1a gezeigten Ausführungsform. Die in Fig. 2 dargestellte Ausführungsform weist darüber hinaus noch das Merkmal auf, gemäß welchem der ID-Geber 1 mehrteilig ausgebildet ist, nämlich ein erstes ID-Geber-Teil 10 und ein zweites ID-Geber-Teil 11 aufweist, die lösbar miteinander verbunden sind. Das erste ID-Geber-Teil 10 weist die ID-Geber-BLE-Schnittstelle 2 mit der Antenne 2', den Mikrocontroller 3, den Druckknopf 4 und den Batterieaufnahmeraum 5 auf. In dem zweiten ID-Geber-Teil 11 ist ein als NFC-Tag 20 ausgebildetes separates Speicherelement vorhanden, auf dem die Authentifizierungsinformation hinterlegt ist. Der im ersten ID-Geber-Teil 10 positionierte Mikrocontroller 3 ist mit einem zum Auslesen des NFC-Tags ausgebildeten NFC-Chip gekoppelt und wird so in die Lage versetzt, die Authentifizierungsinformation 8 übermittelt zu erhalten, es sodann zu verschlüsseln und als Bestandteil eines als BLE-Beacon-Paket 7 ausgebildeten Authentifizierungssignals auszusenden.

Fig. 3 ist ein Set 12 zum Zusammenbau eines ID-Gebers 1, beispielsweise in einer Ausführungsform der in Fig. 2 abgebildeten Art, zu entnehmen. Das Set umfasst das erste ID-Geber-Teil 10 und das zweite ID-Geber-Teil 11 separat. Mittels Verbindens des ersten ID-Geber-Teils 10 mit dem zweiten ID-Geber-Teil 11 entsteht der ID-Geber.

Fig. 4 zeigt ein System 13 aus ID-Geber 1 und einer als Personenkraftwagen ausgebildeter physischer Einheit 14. Das Fahrzeug weist eine als Fahrzeugsteuersystem ausgebildete Zugriffs-Steuereinheit 15 auf, wobei die Zugriffs-Steuereinheit 15 umfasst:
- eine Zugriffs-Steuereinheit-BLE-Schnittstelle 16 mit einer Antenne 16`,
- eine zweite Zugriffs-Steuereinheit-BLE-Schnittstelle 17 mit einer zweiten Antenne 17',
- mit der Zugriffs-Steuereinheit-BLE-Schnittstelle gekoppelte Steuer- und Speichermittel 18, wobei die Steuer- und Speichermittel ausgebildet sind, ein von der Zugriffs-Steuereinheit-BLE-Schnittstelle empfangenes Authentifizierungssignal auf seine Authentizität hin zu prüfen.

An dem Fahrzeug ist ein mit den Steuer- und Speichermitteln 18 gekoppelter NFC-Leser 19 angeordnet, mit dem eine Authentifizierungsinformation gelesen werden kann, die auf einem NFC-Tag eines ID-Gebers, beispielsweise dem NFC-Tag 20 des in Fig. 3 dargestellten ID-Gebers, hinterlegt ist.

## Patentansprüche

1. ID-Geber (1) zur Authentifizierung an einer Zugriffs-Steuereinheit einer physischen Einheit anhand einer von dem ID-Geber (1) ausgesandten Authentifizierungsinformation (8), wobei der ID-Geber (1) wenigstens aufweist:
- eine ID-Geber-BLE-Schnittstelle (2) mit einer Antenne,
- einen mit der ID-Geber-BLE-Schnittstelle (2) gekoppelten Mikrocontroller,
- ein mit dem Mikrocontroller (3) gekoppeltes Schaltmittel (4) zur Ausgabe eines Schaltsignals an den Mikrocontroller (3) in Reaktion auf eine Auslösung des Schaltmittels (4),
- einen Batterieaufnahmeraum (6) zur Aufnahme einer Batterie (5) als Stromversorgungsquelle,
wobei der Mikrocontroller (3) eingerichtet ist, in Reaktion auf den Erhalt des Schaltsignals am Mikrocontroller (3) nach der Auslösung des Schaltmittels das Senden eines Authentifizierungssignals mittels der ID-Geber-BLE-Schnittstelle (2) auszulösen,
wobei das Authentifizierungssignal (7) die Authentifizierungsinformation (8) enthält, und
wobei das Authentifizierungssignal (7) als BLE-Beacon-Datenpaket ausgebildet ist.

2. ID-Geber (1) nach Anspruch 1, **dadurch gekennzeichnet, dass** das Schaltmittel (4) ein manuell bedienbarer Druckknopf ist zum Auslösen des Schaltmittels (4) mittels Drückens.

3. ID-Geber (1) nach Anspruch 2, **dadurch gekennzeichnet, dass** der Mikrocontroller (3) eingerichtet ist,
nach Auslösen des Schaltmittels (4) das Authentifizierungssignal (7) auszugeben, wenn eine Dauer des Drückens einen ersten Zeitdauerschwellwert nicht überschritten hat, oder
nach Auslösen des Schaltmittels (4) das Authentifizierungssignal (7) auszugeben, wenn eine Dauer des Drückens einen ersten Zeitdauerschwellwert nicht überschritten hat, aber ein, bevorzugt als BLE-Beacon-Datenpaket ausgebildetes, Alternativsignal auszugeben, wenn die Dauer des Drückens den ersten Zeitdauerschwellwert überschritten hat, oder
nach Auslösen des Schaltmittels (4) das Authentifizierungssignal auszugeben, bevorzugt bevor eine Dauer des Drückens einen ersten Zeitdauerschwellwert überschritten hat, sowie zusätzlich nach dem Senden des Authentifizierungssignals ein, bevorzugt als BLE-Beacon-Datenpaket ausgebildetes, Alternativsignal auszugeben, wenn die Dauer des Drückens den ersten Zeitdauerschwellwert überschritten hat.

4. ID-Geber (1) nach Anspruch 3, **dadurch gekennzeichnet, dass** der Mikrocontroller (3) eingerichtet ist,
nach Auslösen des Schaltmittels (4) das Alternativsignal nur unter der zusätzlichen Bedingung auszugeben, dass die Dauer des Drückens einen zweiten Zeitdauerschwellwert, der größer ist als der erste Zeitdauerschwellwert, nicht überschritten hat, bevorzugt ansonsten das Auslösen als nicht erfolgtes Auslösen zu verwerfen.

5. ID-Geber (1) nach einem der vorhergehenden Ansprüche, **dadurch gekennzeichnet, dass** ein mit dem Mikrocontroller (3) gekoppeltes zweites Schaltmittel in oder an dem ID-Geber (1) angeordnet ist, das bevorzugt als Sensor ausgebildet ist, insbesondere als Bewegungssensor oder als Beschleunigungssensor oder als Gyro-Sensor, zur Ausgabe des Schaltsignals an den Mikrocontroller (3) in Reaktion auf ein Bewegen des ID-Gebers.

6. ID-Geber (1) nach Anspruch 1, **dadurch gekennzeichnet, dass** das Schaltmittel als Bewegungssensor oder als Beschleunigungssensor oder als Gyro-Sensor ausgebildet ist zur Ausgabe des Schaltsignals an den Mikrocontroller (3) in Reaktion auf ein Bewegen des ID-Gebers.

7. ID-Geber (1) nach einem der vorhergehenden Ansprüche, **dadurch gekennzeichnet, dass** das Authentifizierungssignal (7) die verschlüsselte Authentifizierungsinformation (8) enthält,
beispielsweise mit einem der Zugriffs-Steuereinheit zugeordneten öffentlichen Schlüssel eines asymmetrischen kryptographischen Verschlüsselungsverfahrens oder
beispielsweise mit einem der Zugriffs-Steuereinheit zugeordneten geheimen Schlüssel eines symmetrischen kryptographischen Verschlüsselungsverfahrens.

8. ID-Geber (1) nach einem der vorhergehenden Ansprüche, **dadurch gekennzeichnet, dass** der ID-Geber (1) ein Ausgabemittel (9) aufweist, beispielsweise als LED ausgebildet, das zur Signalausgabe nach Erhalt einer, bevorzugt als *Scan request* oder als *Send request* ausgebildeten, BLE-Nachricht ausgebildet ist.

9. ID-Geber (1) nach einem der vorhergehenden Ansprüche, **dadurch gekennzeichnet, dass** die ID-Geber-BLE-Schnittstelle (2) und der Mikrocontroller (3) als System-on-a-Chip ausgebildet sind oder Teil eines System-on-a-Chip sind.

10. ID-Geber (1) nach einem der vorhergehenden Ansprüche, **dadurch gekennzeichnet, dass** im ID-Geber (1) ein separates Speicherelement angeordnet ist, auf dem die Authentifizierungsinformation hinterlegt ist.

11. ID-Geber (1) nach Anspruch 10, wobei das Speicherelement mit dem Mikrocontroller (3) drahtgebunden gekoppelt ist.

12. ID-Geber (1) nach Anspruch 10 oder nach Anspruch 11, wobei das Speicherelement als RFID-Transponder, bevorzugt als passiver RFID-Transponder, oder als NFC-Tag ausgebildet ist.

13. ID-Geber (1) nach Anspruch 12, wobei das Speicherelement als NFC-Tag ausgebildet ist und der Mikrocontroller (3) mit einem zum Auslesen des NFC-Tags ausgebildeten NFC-Chip gekoppelt ist.

14. ID-Geber (1) nach einem der Ansprüche 10 bis 13, **dadurch gekennzeichnet, dass** der Mikrocontroller (3) zum Verschlüsseln der ihm von dem Speicherelement (20) bereitgestellten Authentifizierungsinformation und zur Bildung des mit der Authentifizierungsinformation versehenen und als BLE-Beacon-Paket ausgebildeten Authentifizierungssignals eingerichtet ist.

15. ID-Geber (1) nach einem der Ansprüche 10 bis 14, **dadurch gekennzeichnet, dass** der ID-Geber (1) mehrteilig ausgebildet ist und zumindest ein erstes ID-Geber-Teil (10) und ein zweites ID-Geber-Teil (11) aufweist, die lösbar oder unlösbar miteinander verbunden sind, wobei
das erste ID-Geber-Teil (10) die ID-Geber-BLE-Schnittstelle (2) mit der Antenne (2) und den Mikrocontroller (3), sowie bevorzugt auch das Schaltmittel (4) und den Batterieaufnahmeraum (5) enthält, und wobei
das zweite ID-Geber-Teil (11) das separate Speicherelement (20) enthält.

16. Set (12) zum Zusammenbau eines ID-Gebers (1) mit den Merkmalen des Anspruchs 15, wobei das Set das erste ID-Geber-Teil (11) und das zweite ID-Geber-Teil (12) separat umfasst zum Herstellen des ID-Gebers (1) mittels Verbindens des ersten ID-Geber-Teils (10) mit dem zweiten ID-Geber-Teil (11).

17. Set nach Anspruch 16, wobei das erste ID-Geber-Teil (10) und das zweite ID-Geber-Teil (11) zueinander komplementäre Verbindungsmittel aufweist, beispielsweise einen Bajonett-Verschluss.

18. System (13) aus ID-Geber (1) mit den Merkmalen eines der Ansprüche 1 bis 15 und aus physischer Einheit (14) mit einer Zugriffs-Steuereinheit (15), wobei die Zugriffs-Steuereinheit (15) umfasst:
- eine Zugriffs-Steuereinheit-BLE-Schnittstelle (16, 17) mit einer Antenne (16`. 17`),
- mit der Zugriffs-Steuereinheit-BLE-Schnittstelle gekoppelte Steuer- und Speichermittel (18), wobei die Steuer- und Speichermittel (18) ausgebildet sind, ein von der Zugriffs-Steuereinheit-BLE-Schnittstelle (16, 17) empfangenes Authentifizierungssignal auf seine Authentizität hin zu prüfen,
wobei die auf dem ID-Geber (1) vorhandene Authentifizierungsinformation und auf den Steuer- und Speichermitteln (18) vorhandene Authentizitätsprüfungsinformationen zueinander zugeordnete, bevorzugt komplementäre, kryptographische Schlüssel sind oder umfassen.

19. System nach Anspruch 18, **dadurch gekennzeichnet, dass** die physische Einheit eine Anzahl n wenigstens zweier Zugriffs-Steuereinheit-BLE-Schnittstellen (16, 17) aufweist, die voneinander beabstandet sind, und dass die Steuer- und Speichermittel ausgebildet sind, an den Zugriffs-Steuereinheit-BLE-Schnittstellen (16, 17) beim Empfang des Authentifizierungssignals erfasste RSSI-Werte für eine n-Lateration und/oder eine n-Angulation zur Positionsermittlung des ID-Gebers auszuwerten.

20. System nach Anspruch 18 oder nach Anspruch 19, **dadurch gekennzeichnet, dass** an der physischen Einheit (14) ein mit den Steuer- und Speichermitteln (18) gekoppelter NFC-Leser (19) angeordnet ist, wobei die Steuer- und Speichermittel ausgebildet sind, eine mit dem NFC-Leser erfasste Authentifizierungsinformation auf ihre Authentizität hin zu prüfen.

21. System nach einem der Ansprüche 18 bis 20, außerdem aufweisend ein Smartphone, welches zum Aussenden des Authentifizierungssignals als BLE-Beacon-Datenpaket eingerichtet ist.

22. System nach einem der Ansprüche 18 bis 21, **dadurch gekennzeichnet, dass** die physische Einheit (14) ein Fahrzeug ist, bevorzugt ein Landfahrzeug, besonders bevorzugt ein Personenkraftwagen.
